# FASCICULE DE BREVET EUROPEEN

(11) **EP 3 100 333 B1**
(45) Date de publication et mention de la délivrance du brevet: **27.03.2019**
(21) Numéro de dépôt: 15706871.9
(22) Date de dépôt: 28.01.2015
(51) Int. Cl.: H02J 5/00, H02J 7/14

(54) **SYSTÈME DE DISTRIBUTION ET DE CONVERSION ÉLECTRIQUE POUR UN AÉRONEF**
ELEKTRISCHES UMWANDLUNGS- UND VERTEILUNGSSYSTEM FÜR EIN FLUGZEUG
ELECTRICAL CONVERSION AND DISTRIBUTION SYSTEM FOR AN AIRCRAFT

(30) Priorité: 31.01.2014 FR 1450791
(43) Date de publication de la demande: 07.12.2016
(73) Titulaire: Safran Electrical & Power, 31702 Blagnac Cedex (FR)
(72) Inventeur: CASIMIR, Roland, F-78100 Saint Germain en Laye (FR); GIORGIS, Vincent, F-94120 Saint Maur des Fosses (FR); DE WERGIFOSSE, Eric, F-77515 Saint Augustin (FR)
(74) Mandataire: Robert, Mathias
(86) Numéro de dépôt international: PCT/FR2015/050196
(87) Numéro de publication internationale: WO 2015/114252

(56) Documents cités:
- EP-A2- 1 792 379
- FR-A1- 2 907 762
- FR-A1- 2 941 107
- FR-A1- 2 990 573

## Description

La présente invention concerne un système de distribution et de conversion électrique pour un aéronef.

L'aéronef est par exemple un avion dans lequel les systèmes non propulsifs sont alimentés principalement par de la puissance électrique.

Les systèmes non-propulsifs d'un avion sont généralement alimentés par trois réseaux de puissance prélevée sur les moteurs ou turboréacteurs de l'avion, à savoir un réseau de puissance hydraulique, un réseau de puissance électrique et un réseau de puissance pneumatique.

Le réseau de puissance hydraulique sert généralement à alimenter des actionneurs destinés à la commande de vol, des systèmes d'extension et de rétractation des trains d'atterrissage, de guidage de la roue avant et de freinage.

Le réseau de puissance électrique sert généralement à alimenter les charges techniques comme l'avionique, l'éclairage, les pompes à carburant, des ventilateurs, et des charges commerciales comme les offices (c'est-à-dire les zones de cuisine) et les systèmes de divertissement des passagers.

Enfin, la puissance pneumatique sert principalement à alimenter le système de pressurisation et de conditionnement d'air de la cabine, le système de protection de la voilure et des nacelles contre le givre et le démarrage des moteurs.

De nouvelles architectures de systèmes non-propulsifs nécessitant une part plus importante d'énergie électrique sont apparues récemment. Les avancées technologiques dans le domaine de la conversion d'énergie électrique offrent la possibilité de réaliser l'ensemble des fonctions précitées avec des systèmes alimentés en puissance électrique.

L'utilisation de systèmes électriques ou électromécaniques comprenant, entre autres, de l'électronique de puissance et des actionneurs, présente les avantages suivants.

De tels systèmes ne sont utilisés que lorsque cela est nécessaire, de sorte que le prélèvement de puissance sur les moteurs de l'avion peut être optimisé. Par ailleurs, le coût de maintenance de tels systèmes est plus faible que le coût de maintenance des systèmes hydrauliques ou pneumatiques.

Le principal inconvénient est cependant la généralisation de systèmes électriques ayant des éléments d'électronique de puissance dédiés (convertisseurs de puissance dédiés, etc..).

Le document FR 2 907 762 par exemple divulgue un système de distribution et de conversion électrique pour un aéronef dans lequel chaque convertisseur est dédié à une fonction particulière (alimentation d'un moto-compresseur du système de conditionnement d'air, par exemple).

Ce document divulgue également une interface entre une ou plusieurs batteries et des convertisseurs de puissance. Cette interface est réalisée notamment par l'intermédiaire d'un convertisseur de type DC/DC, nommé « Buck Boost Converter Unit ». Cette interface ne permet cependant pas d'assurer un démarrage électrique d'un générateur-démarreur synchrone auxiliaire destiné à être couplé à un groupe auxiliaire de puissance (ou *Auxiliary Power Unit* - APU, en anglais).

Il apparaît donc nécessaire de pouvoir disposer d'un système de distribution et de conversion électrique pour un aéronef, permettant de réduire le nombre d'éléments électroniques de puissance, tels par exemple que des convertisseurs, tout en assurant un maximum de fonctions au sein de l'aéronef.

L'invention a notamment pour but d'apporter une solution simple, efficace et économique à ce problème.

A cet effet, elle propose un système de distribution et de conversion électrique pour un aéronef, le système comportant au moins un générateur-démarreur synchrone destiné à être couplé à un moteur de l'aéronef, un redresseur apte à transformer une tension alternative en une tension continue, au moins un générateur-démarreur synchrone auxiliaire destiné à être couplé à un groupe auxiliaire de puissance, au moins un premier, un deuxième et un troisième convertisseurs de puissance aptes à transformer une tension continue en une tension alternative ou inversement, au moins une batterie apte à délivrer une tension continue, des moyens de liaison et de commutation aptes à relier électriquement, dans un premier mode de fonctionnement, la batterie au générateur-démarreur synchrone auxiliaire, par l'intermédiaire successivement du troisième convertisseur de puissance, du premier convertisseur de puissance et du deuxième convertisseur de puissance, lesdits moyens de liaison et de commutation étant également aptes à relier électriquement, dans un deuxième mode de fonctionnement, le générateur-démarreur synchrone à la batterie par l'intermédiaire successivement du redresseur, du premier convertisseur de puissance et du troisième convertisseur de puissance.

Ainsi, dans le premier mode de fonctionnement, il est possible d'assurer le démarrage du groupe auxiliaire de puissance grâce à la batterie. De façon alternative, dans le premier mode de fonctionnement, la batterie peut être chargée à l'aide du groupe auxiliaire de puissance.

Dans le deuxième mode de fonctionnement, la batterie peut être chargée à l'aide du moteur de l'aéronef.

Le système peut comporter un transformateur situé entre le premier convertisseur de puissance et le troisième convertisseur de puissance.

Dans ce cas, le transformateur peut être du type monophasé et comporter une première et une seconde bornes d'entrée/sortie et une première et une seconde bornes de sortie/entrée.

En outre, le premier et le deuxième convertisseurs de puissance peuvent être triphasés et comporter chacun six cellules de commutation, chaque cellule comportant par exemple une diode et un transistor, en particulier un transistor bipolaire à grille isolée, le premier et le deuxième convertisseurs de puissance comportant chacun une première et une seconde bornes d'entrée/sortie et une première, une deuxième et une troisième bornes de sortie/entrée.

Dans ce cas, la première borne de sortie/entrée du premier convertisseur de puissance peut être apte à être reliée à la première borne d'entrée/sortie du transformateur, la deuxième borne de sortie/entrée du premier convertisseur de puissance étant apte à être reliée à la deuxième borne d'entrée/sortie du transformateur.

De plus, la troisième borne de sortie/entrée du premier convertisseur de puissance peut être apte à être reliée à la première borne d'entrée/sortie du transformateur, à la seconde borne d'entrée/sortie du transformateur, ou encore à aucune desdites bornes d'entrée/sortie du transformateur.

Ceci permet ainsi de pallier à une éventuelle défaillance de la liaison entre la première borne de sortie/entrée du premier convertisseur de puissance et la première borne d'entrée/sortie du transformateur, ou de la liaison entre la deuxième borne de sortie/entrée du convertisseur de puissance et la deuxième borne d'entrée/sortie du transformateur.

Avantageusement, la première borne d'entrée/sortie du premier convertisseur de puissance est reliée à la première borne d'entrée/sortie du deuxième convertisseur de puissance, la seconde borne d'entrée/sortie du premier convertisseur de puissance étant reliée à la seconde borne d'entrée/sortie du deuxième convertisseur de puissance.

De préférence, le premier et le deuxième convertisseurs de puissance comportent chacun trois branches reliées en parallèles les unes par rapport aux autres, au niveau de deux extrémités de liaison, chaque branche comportant deux cellules de commutation agencées en série et un point de raccordement situé entre les deux cellules de commutation, chaque borne de sortie/entrée du convertisseur de puissance correspondant étant reliée à l'un desdits points de raccordement, chaque borne d'entrée/sortie du convertisseur de puissance correspondant étant reliée à l'une desdites extrémités de liaison.

Selon une caractéristique de l'invention, le troisième convertisseur de puissance comporte deux branches reliées en parallèles l'une à l'autre, au niveau de deux extrémités de liaison, chaque branche comportant deux cellules de commutation agencées en série et un point de raccordement situé entre les deux cellules de commutation, chaque borne d'entrée/sortie du troisième convertisseur de puissance étant reliée à l'un desdits points de raccordement, chaque borne de sortie/entrée du troisième convertisseur de puissance étant reliée à l'une desdites extrémités de liaison.

Dans ce cas, chaque borne de sortie du transformateur est reliée à l'une des bornes d'entrée/sortie du troisième convertisseur de puissance, chaque borne de sortie/entrée du troisième convertisseur de puissance étant reliée à l'un des deux pôles de la batterie.

L'invention sera mieux comprise et d'autres détails, caractéristiques et avantages apparaîtront à la lecture de la description suivante faite à titre d'exemple non limitatif en référence aux dessins annexés dans lesquels :
- la figure 1 est une vue schématique d'une forme de réalisation du système selon l'invention,
- la figure 2 est une vue schématique d'une partie du système selon l'invention, illustrant le premier mode de fonctionnement,
- la figure 3 est une vue schématique d'une partie du système selon l'invention, illustrant le deuxième mode de fonctionnement.

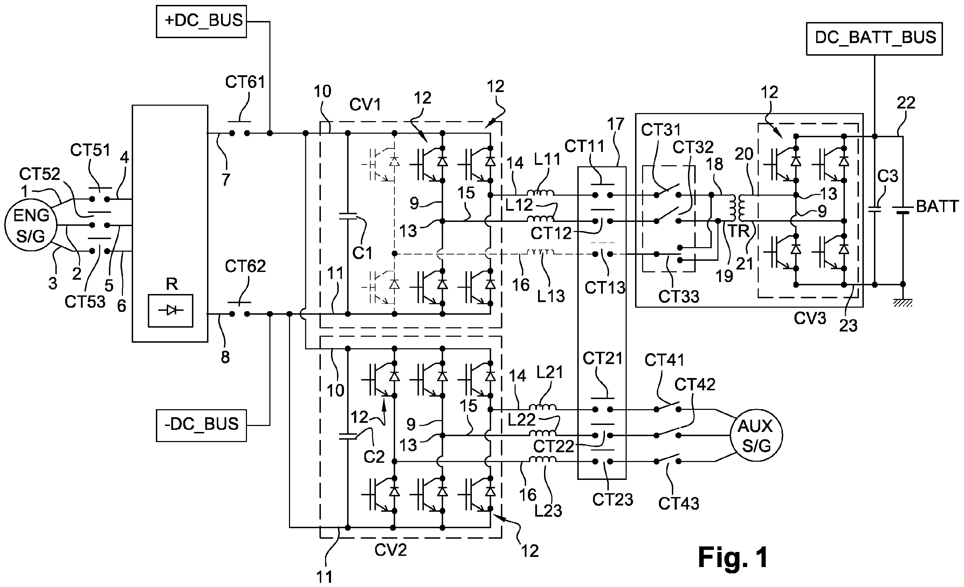

Un système de distribution et de conversion électrique pour un avion, selon une forme de réalisation privilégiée est illustré à la figure 1.

L'avion comporte classiquement un moteur couplé en rotation à un générateur-démarreur synchrone ENG S/G, et un groupe auxiliaire de puissance (ou Auxiliary Power Unit, en anglais), couplé en rotation à un générateur-démarreur synchrone auxiliaire AUX S/G.

Chaque générateur-démarreur ENG S/G, AUX S/G est une machine synchrone triphasée capable, soit de démarrer le moteur correspondant lorsqu'il est alimenté par une tension alternative (mode démarreur), soit de générer une tension alternative lorsque le moteur est démarré (mode générateur). On notera que, en mode générateur, la tension générée a une fréquence variable qui est fonction de la vitesse de rotation du moteur. La tension générée est par exemple de 230 V ou 115 V (en tensions simples) et la fréquence est par exemple comprise entre 360 et 800 Hz.

Le générateur-démarreur comporte des bornes référencées 1, 2, 3, reliées à des entrées 4, 5, 6 d'un redresseur R, par l'intermédiaire respectivement de contacteurs CT51, CT52 et CT53. Le redresseur R comporte deux sorties référencées 7, 8. Un tel redresseur R permet, comme cela est connu en soi, de transformer une tension alternative triphasée en une tension continue.

Les sorties 7, 8 sont reliées respectivement, par l'intermédiaire de contacteurs CT61 et CT62 à des barres de bus +DC_BUS et -DC_BUS dont les potentiels sont respectivement de +270V ou +135 V pour la barre +DC-BUS et -270V ou -135V pour la barre -DC_BUS. La barre +DC_BUS est également reliée à une première borne d'entrée/sortie d'un premier convertisseur de puissance CV1 et à une première borne d'entrée/sortie d'un deuxième convertisseur de puissance CV2. La barre -DC_BUS est reliée à une seconde borne d'entrée/sortie du premier convertisseur de puissance CV1 et à une seconde borne d'entrée/sortie du deuxième convertisseur de puissance CV2.

Chaque convertisseur de puissance CV1, CV2 est du type triphasé et est apte à transformer une tension continue en une tension alternative, ou inversement. Plus particulièrement, chaque convertisseur de puissance CV1, CV2 comporte trois branches 9 reliées en parallèles les unes par rapport aux autres, au niveau de deux extrémités de liaison 10, 11 formant les bornes d'entrée/sortie dudit convertisseur CV1, CV2 , chaque branche 9 comportant deux cellules de commutation 12 agencées en série et un point de raccordement 13 situé entre les deux cellules de commutation 12.

Chaque cellule de commutation 12 comporte une diode et un transistor, en particulier un transistor bipolaire à grille isolée, comme cela est connu en soi.

Chaque convertisseur de puissance comporte trois bornes de sortie/entrée référencées 14, 15, 16, chaque borne de sortie/entrée 14, 15, 16 du convertisseur de puissance correspondant CV1, CV2 étant reliée à l'un desdits points de raccordement 13. Un condensateur C1, C2 est monté entre les bornes d'entrée/sortie 10,11 de chaque convertisseur CV1, CV2.

Les bornes de sortie/entrée 14, 15, 16 du deuxième convertisseur de puissance CV2 sont reliées aux trois bornes du générateur-démarreur synchrone auxiliaire AUX S/G, par l'intermédiaire respectivement d'inductances L21, L22, L23, de contacteurs CT21, CT22, CT23 appartenant à une matrice de commutation 17 et de contacteurs CT41, CT42, CT43.

Les bornes de sortie/entrée 14 et 15 du premier convertisseur de puissance CV1 sont reliées à des bornes d'entrée/sortie 18, 19 d'un transformateur TR, par l'intermédiaire respectivement d'inductances L11, L12, de contacteurs CT11, CT12 appartenant à la matrice de commutation 17, et de contacteurs CT31, CT32. La borne de sortie/entrée 16 du premier convertisseur de puissance CV1 peut être reliée, soit à la borne 18, soit à la borne 19 du transformateur TR, par l'intermédiaire d'une inductance L13, d'un contacteur CT13 appartenant à la matrice de commutation 17, et d'un contacteur CT33. Plus particulièrement, le contacteur CT33 comporte trois positions, une première position permettant de relier la borne 16 à la borne 18, une deuxième position permettant de relier la borne 16 à la borne 19, et une troisième position permettant de déconnecter la borne 16 de la borne 18 et de la borne 19. La ligne correspondante peut ainsi être reliée à l'une ou l'autre des bornes 18, 19, en cas de défaillance.

Le transformateur TR permet de réaliser une isolation galvanique et d'augmenter ou de réduire, selon le rapport de transformation, la tension alternative entre les bornes correspondantes du transformateur TR.

Les bornes de sortie/entrée 20, 21 du transformateur TR sont reliées à des bornes d'entrée/sortie d'un troisième convertisseur de puissance CV3, ledit convertisseur de puissance CV3 étant apte à transformer une tension continue en une tension alternative monophasée, ou inversement.

Plus particulièrement, le convertisseur de puissance CV3 est de type monophasé et comporte deux branches 9 reliées en parallèles l'une à l'autre, au niveau de deux extrémités de liaison 22, 23, chaque branche 9 comportant deux cellules de commutation 12 agencées en série et un point de raccordement 13 situé entre les deux cellules de commutation 12. Chaque borne d'entrée/sortie 20, 21 du troisième convertisseur de puissance CV3 est reliée à l'un desdits points de raccordement 13. Par ailleurs, chaque borne de sortie/entrée 22, 23 du troisième convertisseur de puissance CV3 est reliée à l'une desdites extrémités de liaison. Un condensateur C3 est monté entre les bornes 22 et 23. De même, une batterie BATT est montée entre les bornes 22 et 23 du convertisseur de puissance CV3.

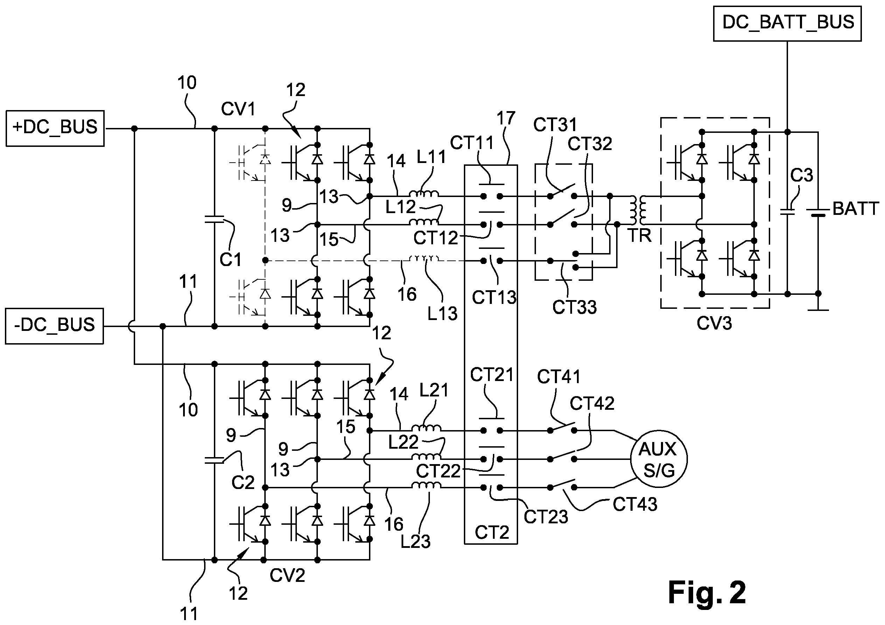

Un premier mode de fonctionnement d'un tel système est illustré à la figure 2. Dans ce mode, la batterie BATT est reliée au générateur-démarreur auxiliaire AUX S/G par l'intermédiaire du troisième convertisseur de puissance CV3, du transformateur TR, du premier convertisseur de puissance CV1 et du deuxième convertisseur de puissance CV2.

Dans ce premier mode de fonctionnement, il est possible de démarrer le générateur-démarreur auxiliaire AUX S/G, et donc le groupe auxiliaire de puissance couplé à celui-ci, à l'aide de la batterie BATT.

Dans ce mode de fonctionnement, le générateur-démarreur ENG S/G et le redresseur R sont déconnectés des barres +DC_BUS et - DC_BUS, et donc des convertisseurs CV1 et CV2. La batterie BATT devient donc la seule source d'énergie alimentant les convertisseurs CV1 et CV2. A cet effet, le convertisseur CV3 (également appelé Buck Boost Converter, en anglais), peut générer une tension alternative à 400 Hz et monophasée, à partir de la source de tension continue formée par la batterie BATT. Cette tension alternative est ensuite élevée à une tension de 115V ou 230V par le transformateur monophasé TR. La fréquence reste alors fixée à 400 Hz.

On notera que la tension de sortie du transformateur TR peut être filtrée par l'intermédiaire d'un filtre passe-bas, appelé filtre sinus ou filtre LC. Ce filtre a pour rôle de lisser les fronts de tension de la forme d'onde afin d'obtenir une forme sinusoïdale. Les impédances L11, L12, L13 et L21, L22, L23 peuvent former une partie du filtre passe-bas.

Le convertisseur CV1 est utilisé pour redresser la tension alternative fournie par le transformateur TR.

Deux techniques de redressement de la tension alternative au niveau du convertisseur CV1 sont possibles :
- Un redressement dit passif, permettant d'élever la tension continue de sortie dudit convertisseur CV1 à 270V ou 540V pour, respectivement, une tension alternative d'entrée de 115V ou de 230V. Dans ce cas, seules les diodes des cellules de commutation 12 permettent de redresser la tension.
- Un redressement dit actif ou PFC (Power Factor Correction) permettant d'élever la tension alternative d'entrée à une tension supérieure à 270V, à partir d'une tension continue de sortie de 115V. Pour cela, la tension est redressée grâce aux transistors et aux diodes des cellules de commutation 12. L'avantage d'un tel redressement actif est que la tension est régulée par le contrôle du convertisseur CV1 quel que soit le niveau de puissance appelé par le générateur-démarreur auxiliaire AUX S/G. De plus, le facteur de puissance (déphasage entre la tension alternative et le courant alternatif) est quasiment unitaire.

Le convertisseur CV2 est ensuite utilisé pour piloter le démarrage du générateur-démarreur auxiliaire AUX S/G. Ce convertisseur CV2 permet alors de transformer une tension continue en une tension alternative triphasée.

En variante, dans le mode illustré à la figure 2, si le générateur-démarreur auxiliaire AUX S/G est démarré, il est alors possible de recharger la batterie. Le convertisseur CV2 transforme alors la tension alternative fournie par le générateur-démarreur auxiliaire AUX S/G en une tension continue et le convertisseur CV1 transforme cette tension continue en une tension alternative. Ensuite, la tension alternative fournie en sortie du transformateur TR, entre les bornes 20 et 21, est à nouveau transformée en une tension continue, grâce au convertisseur CV3, cette tension étant appliquée aux bornes de la batterie BATT afin de la recharger.

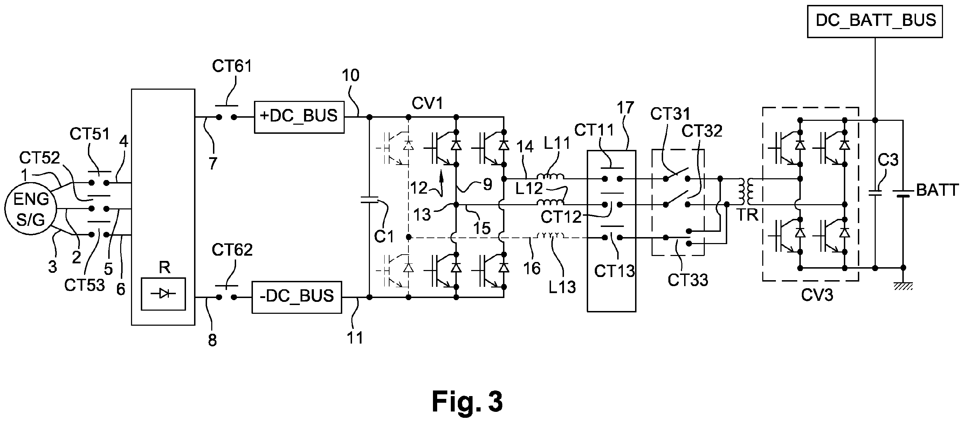

La figure 3 illustre un autre mode de fonctionnement dans lequel, le générateur-démarreur ENG S/G et le redresseur R sont connectés aux barres +DC_BUS et -DC_BUS et au convertisseur CV1 par l'intermédiaire des contacteurs CT61 et CT62. Dans ce cas, la batterie BATT forme une charge électrique.

Ce mode de fonctionnement permet de recharger la batterie BATT, à partir du générateur-démarreur ENG S/G, c'est-à-dire lors du fonctionnement du moteur qui est couplé au générateur-démarreur ENG S/G.

Dans le cas de l'invention, les convertisseurs de puissance CV1 et CV2 peuvent être choisis indifféremment parmi une matrice de convertisseurs comportant n convertisseurs de puissance de structures identiques CV1, CV2, ... CVn. Il convient donc de s'assurer que, en cas de besoin, au moins l'un des convertisseurs de la matrice (dans le cas du mode de fonctionnement de la figure 3) ou au moins deux convertisseurs de la matrice (dans le cas du mode de fonctionnement de la figure 2) sont disponibles. Les autres convertisseurs de la matrice peuvent servir à alimenter des charges électriques, comme cela est connu en soi.

## Revendications

1. Système de distribution et de conversion électrique pour un aéronef, le système comportant au moins un générateur-démarreur synchrone (ENG S/G) destiné à être couplé à un moteur de l'aéronef, un redresseur (R) apte à transformer une tension alternative en une tension continue, au moins un générateur-démarreur synchrone auxiliaire (AUX S/G) destiné à être couplé à un groupe auxiliaire de puissance, au moins un premier, un deuxième et un troisième convertisseurs de puissance (CV1, CV2, CV3) aptes chacun à transformer une tension continue en une tension alternative ou inversement, et au moins une batterie (BATT) apte à délivrer une tension continue, **caractérisé en ce qu'**il comporte en outre des moyens de liaison et de commutation aptes à relier électriquement, dans un premier mode de fonctionnement, la batterie (BATT) au générateur-démarreur synchrone auxiliaire (AUX S/G), par l'intermédiaire successivement du troisième convertisseur de puissance (CV3), du premier convertisseur de puissance (CV1) et du deuxième convertisseur de puissance (CV2), lesdits moyens de liaison et de commutation étant également aptes à relier électriquement, dans un deuxième mode de fonctionnement, le générateur-démarreur synchrone (ENG S/G) à la batterie (BATT) par l'intermédiaire successivement du redresseur (R), du premier convertisseur de puissance (CV1) et du troisième convertisseur de puissance (CV3).

2. Système selon la revendication 1, **caractérisé en ce qu'**il comporte un transformateur (TR) situé entre le premier convertisseur de puissance (CV1) et le troisième convertisseur de puissance (CV3).

3. Système selon la revendication 2, **caractérisé en ce que** le transformateur (TR) est monophasé et comporte une première et une seconde bornes d'entrée/sortie (18, 19) et une première et une seconde bornes de sortie/entrée (20, 21).

4. Système selon la revendication 3, **caractérisé en ce que** le premier et le deuxième convertisseurs de puissance (CV1, CV2) sont triphasés et comportent chacun six cellules de commutation (12), chaque cellule (12) comportant par exemple une diode et un transistor, en particulier un transistor bipolaire à grille isolée, le premier et le deuxième convertisseurs de puissance (CV1, CV2) comportant chacun une première et une seconde bornes d'entrée/sortie (10, 11) et une première, une deuxième et une troisième bornes de sortie/entrée (14, 15, 16).

5. Système selon la revendication 4, **caractérisé en ce que** la première borne de sortie/entrée (14) du premier convertisseur de puissance (CV1) est apte à être reliée à la première borne d'entrée/sortie (18) du transformateur (TR), la deuxième borne de sortie/entrée (15) du premier convertisseur de puissance (CV1) étant apte à être reliée à la deuxième borne d'entrée/sortie (19) du transformateur (TR).

6. Système selon la revendication 5, **caractérisé en ce que** la troisième borne de sortie/entrée (16) du premier convertisseur de puissance (CV1) est apte à être reliée à la première borne d'entrée/sortie (18) du transformateur (TR), à la seconde borne d'entrée/sortie (19) du transformateur (TR), ou encore à aucune desdites bornes d'entrée/sortie (18, 19) du transformateur (TR).

7. Système selon l'une des revendications 4 à 6, **caractérisé en ce que** la première borne d'entrée/sortie (10) du premier convertisseur de puissance (CV1) est reliée à la première borne d'entrée/sortie (10) du deuxième convertisseur de puissance (CV2), la seconde borne d'entrée/sortie (11) du premier convertisseur de puissance (CV1) étant reliée à la seconde borne d'entrée/sortie (11) du deuxième convertisseur de puissance (CV2).

8. Système selon l'une des revendications 4 à 7, **caractérisé en ce que** le premier et le deuxième convertisseurs de puissance (CV1, CV2) comportent chacun trois branches (9) reliées en parallèle les unes par rapport aux autres, à l'endroit de deux extrémités de liaison (10, 11), chaque branche (9) comportant deux cellules de commutation (12) agencées en série et un point de raccordement (13) situé entre les deux cellules de commutation (12), chaque borne de sortie/entrée (14, 15, 16) du convertisseur de puissance correspondant (CV1, CV2) étant reliée à l'un desdits points de raccordement (13), chaque borne d'entrée/sortie (10, 11) du convertisseur de puissance correspondant (CV1, CV2) étant reliée à l'une desdites extrémités de liaison (10, 11).

9. Système selon l'une des revendications 4 à 7, **caractérisé en ce que** le troisième convertisseur de puissance (CV3) comporte deux branches (9) reliées en parallèle l'une à l'autre, à l'endroit de deux extrémités de liaison (22, 23), chaque branche (9) comportant deux cellules de commutation (12) agencées en série et un point de raccordement (13) situé entre les deux cellules de commutation (12), chaque borne d'entrée/sortie du troisième convertisseur de puissance (CV3) étant reliée à l'un desdits points de raccordement (13) chaque borne de sortie/entrée du troisième convertisseur de puissance (CV3) étant reliée à l'une desdites extrémités de liaison (22, 23).

10. Système selon la revendication 9, **caractérisé en ce que** chaque borne de sortie (20, 21) du transformateur (TR) est reliée à l'une des bornes d'entrée/sortie du troisième convertisseur de puissance (CV3), chaque borne de sortie/entrée (22, 23) du troisième convertisseur de puissance (CV3) étant reliée à l'un des deux pôles de la batterie (BATT).

## Patentansprüche

1. System zum Verteilen und elektrischen Umwandeln für Luftfahrzeuge, wobei das System zumindest einen synchronen Starter-Generator (ENG S/G), der dazu bestimmt ist, an ein Triebwerk des Luftfahrzeugs gekoppelt zu werden, einen Gleichrichter (R), der dazu geeignet ist, eine Wechselspannung in eine Gleichspannung umzuwandeln, zumindest einen zusätzlichen synchronen Starter-Generator (AUX S/G), der dazu bestimmt ist, an ein Hilfstriebwerk gekoppelt zu werden, sowie zumindest einen ersten, einen zweiten und einen dritten Leistungswandler (CV1, CV2, CV3) enthält, die jeweils dazu geeignet sind, eine Gleichspannung in eine Wechselspannung oder umgekehrt umzuwandeln, und zumindest eine Batterie (BATT), die dazu geeignet ist, eine Gleichspannung zu liefern, **dadurch gekennzeichnet, dass** es ferner Verbindungs- und Schaltmittel enthält, die dazu geeignet sind, die Batterie (BATT) in einer ersten Betriebsart nacheinander über den dritten Leistungswandler (CV3), den ersten Leistungswandler (CV1) und den zweiten Leistungswandler (CV2) elektrisch mit dem zusätzlichen synchronen Starter-Generator (AUX S/G) zu verbinden, wobei die Verbindungs- und Schaltmittel auch dazu geeignet sind, in einer zweiten Betriebsart den synchronen Starter-Generator (ENG S/G) nacheinander über den Gleichrichter (R), den ersten Leistungswandler (CV1) und den dritten Leistungswandler (CV3) elektrisch mit der Batterie (BATT) zu verbinden.

2. System nach Anspruch 1, **dadurch gekennzeichnet, dass** es einen Transformator (TR) enthält, der zwischen dem ersten Leistungswandler (CV1) und dem dritten Leistungswandler (CV3) liegt.

3. System nach Anspruch 2, **dadurch gekennzeichnet, dass** der Transformator (TR) einphasig ist und eine erste und eine zweite Ein-/Ausgangsklemme (18, 19) und eine erste und eine zweite Aus-/Eingangsklemme (20, 21) enthält.

4. System nach Anspruch 3, **dadurch gekennzeichnet, dass** der erste und der zweite Leistungswandler (CV1, CV2) dreiphasig sind und jeweils sechs Schaltzellen (12) aufweisen, wobei jede Zelle (12) beispielsweise eine Diode und einen Transistor, insbesondere einen bipolaren Transistor mit isoliertem Gate, enthält, wobei der erste und der zweite Leistungswandler (CV1, CV2) jeweils eine erste und eine zweite Ein-/Ausgangsklemme (10, 11) und eine erste, eine zweite und eine dritte Aus-/Eingangsklemme (14, 15, 16) enthalten.

5. System nach Anspruch 4, **dadurch gekennzeichnet, dass** die erste Aus-/Eingangsklemme (14) des ersten Leistungswandlers (CV1) dazu geeignet ist, mit der ersten Ein-/Ausgangsklemme (18) des Transformators (TR) verbunden zu werden, wobei die zweite Aus-/Eingangsklemme (15) des ersten Leistungswandlers (CV1) dazu geeignet ist, mit der zweiten Ein-/Ausgangsklemme (19) des Transformators (TR) verbunden zu werden.

6. System nach Anspruch 5, **dadurch gekennzeichnet, dass** die dritte Aus-/Eingangsklemme (16) des ersten Leistungswandlers (CV1) dazu geeignet ist, mit der ersten Ein-/Ausgangsklemme (18) des Transformators (TR), mit der zweiten Ein-/Ausgangsklemme (19) des Transformators (TR) oder auch mit keiner der Ein-/Ausgangsklemmen (18, 19) des Transformators (TR) verbunden zu werden.

7. System nach einem der Ansprüche 4 bis 6, **dadurch gekennzeichnet, dass** die erste Ein-/Ausgangsklemme (10) des ersten Leistungswandlers (CV1) mit der ersten Ein-/Ausgangsklemme (10) des zweiten Leistungswandler (CV2) verbunden ist, wobei die zweite Ein-/Ausgangsklemme (11) des ersten Leistungswandlers (CV1) mit der zweiten Ein-/Ausgangsklemme (11) des zweiten Leistungswandlers (CV2) verbunden ist.

8. System nach einem der Ansprüche 4 bis 7, **dadurch gekennzeichnet, dass** der erste und der zweiten Leistungswandler (CV1, CV2) jeweils drei Zweige (9) aufweisen, die an zwei Verbindungsenden (10, 11 parallel miteinander verbunden sind, wobei jeder Zweig (9) zwei in Reihe angeordnete Schaltzellen (12) und einen zwischen den beiden Schaltzellen (12) liegenden Verbindungspunkt (13) aufweist, wobei jede Aus-/Eingangsklemme (14, 15, 16) des entsprechenden Leistungswandlers (CV1, CV2) mit einem der Verbindungspunkte (13) verbunden ist und jede Ein-/Ausgangsklemme (10, 11) des entsprechenden Leistungswandlers (CV1, CV2) mit einem der Verbindungsenden (10, 11) verbunden ist.

9. System nach einem der Ansprüche 4 bis 7, **dadurch gekennzeichnet, dass** der dritte Leistungswandler (CV3) zwei Zweige (9) aufweist, die an zwei Verbindungsenden (22, 23) parallel miteinander verbunden sind, wobei jeder Zweig (9) zwei in Reihe angeordnete Schaltzellen (12) und einen zwischen den beiden Schaltzellen (12) liegenden Verbindungspunkt (13) aufweist, wobei jede Ein-/Ausgangsklemme des dritten Leistungswandlers (CV3) mit einem der Verbindungspunkte (13) verbunden ist und jede Aus-/Eingangsklemme des dritten Leistungswandlers (CV3) mit einem der Verbindungsenden (22, 23) verbunden ist.

10. System nach Anspruch 9, **dadurch gekennzeichnet, dass** jede Ausgangsklemme (20, 21) des Transformators (TR) mit einer der Ein-/Ausgangsklemmen des dritten Leistungswandlers (CV3) verbunden ist, wobei jede Aus-/Eingangsklemme (22, 23) des dritten Leistungswandlers (CV3) mit einem der beiden Pole der Batterie (BATT) verbunden ist.

## Claims

1. An electrical conversion and distribution system for an aircraft, with the system comprising a synchronous starter-generator (ENG S/G) intended to be coupled to an aircraft engine, a rectifier (R) capable of transforming alternating voltage into direct voltage, at least one auxiliary synchronous starter-generator (AUX S/G) intended to be coupled to an auxiliary power group, at least a first, a second and a third power converter (CV1, CV2, CV3) each one being capable of transforming direct voltage into alternating voltage or vice versa, and at least one battery (BATT) capable of supplying direct voltage, **characterized in that** it further comprises linking and switching means capable of electrically connecting, in a first operating mode, the battery (BATT) to the auxiliary synchronous starter-generator (AUX S/G), through the third power converter (CV3), the first power converter (CV1) and the second power converter (CV2) successively, with said linking and switching means also being capable of electrically connecting, in a second operating mode, the synchronous starter-generator (ENG S/G) to the battery (BATT), through the rectifier (R), the first power converter (CV1) and the third power converter (CV3) successively.

2. A system according to claim 1, **characterized in that** it comprises a transformer (TR) positioned between the first power converter (CV1) and the third power converter (CV3).

3. A system according to claim 2, **characterized in that** the transformer (TR) is single-phased and comprise a first and a second input/output terminals (18, 19) and a first and a second output/input terminals (20, 21).

4. A system according to claim 3, **characterized in that** the first and second power converters (CV1, CV2) are three-phased and each comprise six switching cells (12), with each cell (12) comprising a diode and a transistor, for instance, specifically an insulated gate bipolar transistor, with the first and second power converters (CV1, CV2) each comprising a first and a second input/output terminals (10, 11), a third and a fourth output/input terminals (14, 15, 16).

5. A system according to claim 4, **characterized in that** the first output/input terminal (14) of the first power converter (CV1) is capable of being connected to the first input/output terminal (18) of the transformer (TR), with the second output/input terminal (15) of the first power converter (CV1) being capable of being connected to the second input/output terminal (19) of the transformer (TR).

6. A system according to claim 5, **characterized in that** the third output/input terminal (16) of the first power converter (CV1) is capable of being connected to the first input/output terminal (18) of the transformer (TR), to the second input/output terminal (19) of the transformer (TR), or to none of said input/output terminals (18, 19) of the transformer (TR).

7. A system according to one of claims 4 to 6, **characterized in that** the first input/output terminal (10) of the first power converter (CV1) is connected to the first input/output terminal (10) of the second power converter (CV2), with the second input/output terminal (11) of the first power converter (CV1) being connected to the second input/output terminal (11) of the second power converter (CV2).

8. A system according to one of claims 4 to 7, **characterized in that** the first and second power converters (CV1, CV2) each comprise three branches (9) connected in parallel at two linking ends (10, 11), with each branch (9) comprising two switching cells (12) arranged in series and a connection point (13) positioned between the two switching cells (12), with each output/input terminal (14, 15, 16) of the corresponding power converter (CV1, CV2) being connected to one of said connection point (13), with each input/output terminal (10, 11) of the corresponding power converter (CV1, CV2) being connected to one of said linking ends (10, 11).

9. A system according to one of claims 4 to 7, **characterized in that** the third power converter (CV3) comprises two branches (9) connected in parallel, at two linking ends (22, 23), with each branch (9) comprising two switching cells (12) arranged in series and a connection point (13) positioned between the two switching cells (12), with each input/output terminal of the third power converter (CV3) being connected to one of said connection points (13), with each output/input terminal of the third power converter (CV3) being connected to one of said linking ends (22, 23).

10. A system according to claim 9, **characterized in that** each output terminal (20, 21) of the transformer (TR) is connected to one of the input/output terminals of the third power converter (CV3), with each output/input terminal (22, 23) of the third power converter (CV3) being connected to one of the two poles of the battery (BATT).
